# EUROPÄISCHE PATENTANMELDUNG

(11) **EP 3 892 889 A1**
(43) Veröffentlichungstag der Anmeldung: **13.10.2021**
(21) Anmeldenummer: 21166964.3
(22) Anmeldetag: 06.04.2021
(51) Int. Cl.: F16H 49/00, F16H 3/00

(54) **SPANNUNGSWELLENGETRIEBE**

(30) Priorität: 07.04.2020 LU 101732; 21.04.2020 LU 101747
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Spannungswellengetriebe, das sich dadurch auszeichnet, dass eine erste Flexsplineverzahnung mit einer ersten Circularsplineverzahnung in Eingriff steht, und dass eine zweite Flexsplineverzahnung mit einer zweiten Circularsplineverzahnung in Eingriff steht, wobei die Zähneanzahl der ersten Flexsplineverzahnung verschieden ist von der Zähneanzahl der zweiten Flexsplineverzahnung. Das Spannungswellengetriebe weist eine Schaltkupplung zum Umschalten zwischen zwei unterschiedlichen Übersetzungsverhältnissen des Spannungswellengetriebes auf.

## Beschreibung

Die Erfindung betrifft ein Spannungswellengetriebe, bei dem eine erste Flexsplineverzahnung mit einer ersten Circularsplineverzahnung in Eingriff steht und eine zweite Flexsplineverzahnung mit einer zweiten Circularsplineverzahnung in Eingriff steht, wobei die Zähneanzahl der ersten Flexsplineverzahnung verschieden ist von der Zähneanzahl der zweiten Flexsplineverzahnung.

Ein Spannungswellengetriebe besitzt zumeist ein starres, im Querschnitt kreisförmiges, innenverzahntes Zahnrad, das Circularspline genannt wird, und ein flexibles außenverzahntes Zahnrad, das Flexspline genannt wird und das in dem von einem starren, innenverzahnten Zahnrad umgebenen Raumvolumen angeordnet ist. Innerhalb des Flexsplines ist ein zumeist ovaler Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnten Zahnrad rotieren zu können. Der Wellengenerator biegt das Wälzlager und den Flexspline zu einer ovalen Form, um die Verzahnungen des Circularsplines und des Flexsplines in der Hochachse des ovalen Wellengenerators miteinander in Eingriff zu bringen.

Der Flexspline weist eine geringere Anzahl von Zähnen auf als der Circularspline. Wenn der Wellengenerator rotiert, wälzt die Außenseite des Flexsplines auf der Innenseite des Circularsplines ab, wobei die Zähne des Flexsplines an gegenüberliegenden Seiten umlaufend in und außer Eingriff mit den Zähnen des Circularsplines gelangen. Aufgrund des Unterschiedes der Zähneanzahlen kommt es zu einer Drehung des Flexsplines relativ zu dem Circularspline, wenn der Wellengenerator rotiert wird. Der Wellengenerator ist zumeist elliptisch ausgebildet. Es ist jedoch jede von der Kreisform abweichende Form möglich, die im Ergebnis den beschriebenen Eingriff der Verzahnung des flexiblen, außenverzahnten Zahnrades in die Verzahnung des innenverzahnten Zahnrades bewirkt. Auch ist es möglich, den Wellengenerator derart auszubilden, dass die Verzahnung des Flexsplines an drei oder mehr Stellen in die Verzahnung des Circularsplines eingreift.

In Ringbauweise eines Spannungswellengetriebes sind zwei innenverzahnte, starre Hohlräder (Circularspline und Dynamicspline) unterschiedlicher Zähnezahl vorhanden, deren Verzahnungen mit der Außenverzahnung der radialflexiblen, außenverzahnten Hülse (Flexspline) in Zahneingriff stehen. Hierbei weist eines der innenverzahnten Hohlräder dieselbe Anzahl von Zähnen auf wie der Flexspline, während das andere innenverzahnte Hohlrad mehr Zähne aufweist als der Flexspline.

Aus US 2015 0114174 A1 ist ein Spannungswellengetriebe bekannt, bei dem zum Vermeiden eines Überspringens der Verzahnungen ein Flexspline mit einer zweiten Verzahnung, die von einer ersten Verzahnung des Flexsplines beabstandet ist, verwendet wird.

Aus EP 3 173 657 A1 ist ein Spannungswellengetriebe in Ringbauweise bekannt, bei dem der Flexspline zum Erzielen eines besonders kleinen Übersetzungsverhältnisses zwei Verzahnungen mit unterschiedlicher Zähnezahl aufweist.

Die aus dem Stand der Technik bekannten Spannungswellengetriebe haben ein festes Übersetzungsverhältnis.

Es ist die Aufgabe der vorliegenden Erfindung, ein Spannungswellengetriebe anzugeben, das vielseitiger einsetzbar ist.

Die Aufgabe wird durch ein Spannungswellengetriebe gelöst, das durch wenigstens eine Schaltkupplung zum Umschalten zwischen zwei unterschiedlichen Übersetzungsverhältnissen des Spannungswellengetriebes gekennzeichnet ist.

Das erfindungsgemäße Spannungswellengetriebe hat den ganz besonderen Vorteil, dass gleichzeitig zwei unterschiedliche Übersetzungsverhältnisse zur Verfügung stehen, zwischen denen mittels einer Schaltkupplung umgeschaltet werden kann. Alternativ oder zusätzlich (und nach einem eigenständigen Erfindungsgedanken) können, insbesondere ohne eine Schaltkupplung oder ohne Verwendung der Schaltkupplung, gleichzeitig zwei unterschiedliche Übersetzungsverhältnisse zur Verfügung stehen, die beide, insbesondere gleichzeitig, genutzt werden können.

Das erfindungsgemäße Spannungswellengetriebe kann vorteilhaft in Systemen zum Einsatz gebracht werden, in denen die Last- und Dynamikanforderungen keine statischen Größen sind, sondern variieren. Wenn beispielsweise eine Einstellung mit vergleichsweise geringer Last und mit hoher Dynamik erfolgen soll, so ist eine geringere Übersetzung sinnvoll, während bei einer größeren Last und geringerer Dynamik eine größere Übersetzung sinnvoll ist. Das erfindungsgemäße Spannungswellengetriebe bietet vorteilhaft die Möglichkeit einer Umschaltbarkeit zum Anpassen an die unterschiedlichen Last- und Dynamikanforderungen.

Es gibt keine grundsätzliche Beschränkung hinsichtlich der möglichen Übersetzungsverhältnisse und hinsichtlich der Anzahlen der Zähne der ersten oder zweiten Flexsplineverzahnung. Insbesondere gibt es keine grundsätzliche Beschränkung hinsichtlich der Differenz der Anzahl der Zähne der ersten und der Anzahl der Zähne der zweiten Flexsplineverzahnung. Vielmehr ist es erfindungsgemäß möglich, gleichzeitig ganz unterschiedliche Übersetzungsverhältnisse zu realisieren und zur Verfügung zu stellen. Insbesondere kann eines der Übersetzungsverhältnisse um einen Faktor von mehr als 1,1, insbesondere um einen Faktor von mehr als 1,2 oder 1,5 oder 2, größer sein, als das andere Übersetzungsverhältnis.

Die erste Flexsplineverzahnung kann beispielsweise 200 Zähne aufweisen, während die erste Circularsplineverzahnung beispielsweise 202 Zähne aufweist. Auf diese Weise ist zwischen dem ersten Wellengenerator und dem ersten Circularspline ein Übersetzungsverhältnis von i = 100 realisiert. Die zweite Flexsplineverzahnung kann hingegen beispielsweise lediglich 60 Zähne aufweisen, während die zweite Circularsplineverzahnung beispielsweise 62 Zähne aufweist. Auf diese Weise ist zwischen dem zweiten Wellengenerator und dem zweiten Circularspline ein Übersetzungsverhältnis von i = 30 realisiert.

Die Erfindung ist nicht auf eine Umschaltbarkeit zwischen lediglich zwei unterschiedlichen Übersetzungen beschränkt. Insbesondere ist es möglich, dass das Spannungswellengetriebe auch eine größere Zahl von verwendbaren Übersetzungen aufweist, indem wenigstens eine weitere Circularsplineverzahnung mit einer weiteren Flexsplineverzahnung in Eingriff steht. Hierbei weist die weitere Flexsplineverzahnung vorzugsweise eine andere Zähneanzahl auf, als die übrigen Flexsplineverzahnungen. Bei einer besonderen Ausführung ist der erste Circularspline, der die erste Circularsplineverzahnung aufweist, nicht unmittelbar und nicht drehfest mit dem zweiten Circularspline, der die zweite Circularsplineverzahnung aufweist, verbunden. Insbesondere können der erste Circularspline, der die erste Circularsplineverzahnung aufweist, und der zweite Circularspline, der die zweite Circularsplineverzahnung aufweist, beweglich, insbesondere drehbeweglich, zueinander angeordnet sein. Dem ersten Circularspline und dem zweiten Circularspline kann hierbei die Schaltkupplung triebtechnisch nachgeschaltet sein. Hierbei gilt natürlich, dass die Schaltkupplung dem ersten Circularspline und dem zweiten Circularspline triebtechnisch vorgeschaltet ist, wenn das Getriebe im Umkehrbetrieb betrieben wird. Die Schaltkupplung kann insbesondere dazu ausgebildet sein, einen Getriebeabtrieb des Spannungswellengetriebes wahlweise mit dem ersten Circularspline und/oder dem zweiten Circularspline drehmomentübertragend verbinden zu können.

Ein solches erfindungsgemäßes Spannungswellengetriebe kann auch mehrere Schaltkupplungen aufweisen. Beispielsweise kann eine erste Schaltkupplung dazu ausgebildet und angeordnet sein, wahlweise eine drehmomentübertragende Verbindung des ersten Circularsplines mit dem Getriebeabtrieb herzustellen oder lösen zu können. Darüber hinaus kann eine zweite Schaltkupplung dazu ausgebildet und angeordnet sein, wahlweise eine drehmomentübertragende Verbindung des zweiten Circularsplines mit dem Getriebeabtrieb herstellen oder lösen zu können.

Wenn bei einer solchen Ausführung eine drehmomentübertragende Verbindung des ersten Circularsplines mit dem Getriebeabtrieb hergestellt ist und wenn gleichzeitig eine drehmomentübertragende Verbindung des zweiten Circularsplines mit dem Getriebeabtrieb geöffnet ist, weist das Spannungswellengetriebe vom Getriebeantrieb zu dem Getriebeabtrieb ein Übersetzungsverhältnis auf, das durch die Zähneanzahl der ersten Flexsplineverzahnung und die Zähneanzahl des ersten Circularsplines festgelegt ist.

Wenn hingegen eine drehmomentübertragende Verbindung des ersten Circularsplines mit dem Getriebeabtrieb geöffnet ist und wenn gleichzeitig eine drehmomentübertragende Verbindung des zweiten Circularsplines mit dem Getriebeabtrieb geschlossen ist, weist das Spannungswellengetriebe vom Getriebeantrieb zu dem Getriebeabtrieb eine Übersetzungsverhältnis auf, das durch die Zähneanzahl der zweiten Flexsplineverzahnung und die Zähneanzahl des zweiten Circularsplines festgelegt ist.

Wenn eine drehmomentübertragende Verbindung des ersten Circularsplines mit dem Getriebeabtrieb geschlossen ist und wenn gleichzeitig eine drehmomentübertragende Verbindung des zweiten Circularsplines mit dem Getriebeabtrieb ebenfalls geschlossen ist, fungiert das Spannungswellengetriebe als Blockiervorrichtung.

Es ist erfindungsgemäß allerdings nicht zwingend notwendig, zwischen verschiedenen Übersetzungen des Spannungswellengetriebes mittels der Schaltkupplung umzuschalten. Insbesondere kann das erfindungsgemäße Spannungswellengetriebe nach einem eigenständigen Erfindungsgedanken auch derart ausgebildet sein, dass gleichzeitig mehrere Getriebeabtriebe des Spannungswellengetriebes zum gleichzeitigen Antreiben mehrerer unterschiedlicher Systeme oder zum gleichzeitigen Antreiben unterschiedlicher Komponenten desselben Systems bei unterschiedlichen Übersetzungsverhältnissen verwendet werden können. Hierbei ist es sowohl möglich, dass eine Schaltkupplung vorhanden ist als auch, dass keine Schaltkupplung vorhanden ist. Beispielsweise kann vorteilhaft vorgesehen sein, dass der erste Circularspline als ein erster Getriebeabtrieb fungiert und dass der zweite Circularspline als ein zweiter Getriebeabtrieb fungiert. Ein solches erfindungsgemäßes Spannungswellengetriebe kommt auch ohne eine Schaltkupplung aus. Allerdings können vorteilhaft durchaus Schaltkupplungen vorhanden sein, um jeweils wahlweise eine drehmomentübertragende Verbindung von einem der Getriebeabtriebe zu einem angetriebenen System herzustellen oder öffnen zu können.

Bei einer besonderen Ausführung weist das Spannungswellengetriebe einen ersten Wellengenerator und einen zweiten Wellengenerator auf, die drehfest miteinander verbunden sind oder die gemeinsam einstückig hergestellt sind. Insbesondere können die beiden verbundenen oder gemeinsam einstückig hergestellten Wellengeneratoren als Getriebeantrieb dienen.

Die erste Flexsplineverzahnung und die zweite Flexsplineverzahnung sind bei einer vorteilhaften Ausführung Bestandteile desselben Flexsplines. Insbesondere kann der Flexspline eine radialflexible Hülse aufweisen, die die erste Flexsplineverzahnung und die zweite Flexsplineverzahnung aufweist.

Zur Klarstellung sei darauf hingewiesen, dass im Rahmen der vorliegenden Anmeldung mit dem Begriff "Flexsplineverzahnung" eine Laufverzahnung gemeint ist, die mit einer Circularsplineverzahnung in Eingriff steht.

Die Hülse des Flexsplines kann an einem Ende drehfest mit einer radial nach außen gerichteten Krempe verbunden sein. Die Krempe kann insbesondere zur Ankopplung an weitere Bauteile, insbesondere zur drehfesten Ankopplung an ein Getriebegehäuse, verwendet werden.

Es ist alternativ oder zusätzlich auch möglich, dass die Hülse an einem Ende drehfest mit einem radial nach innen gerichteten Boden oder einer radial nach innen gerichteten Kreisscheibe verbunden ist. Der Boden bzw. die Kreisscheibe kann insbesondere zur Ankopplung an weitere Bauteile, insbesondere zur drehfesten Ankopplung an ein Getriebegehäuse, verwendet werden.

Bei einer ganz besonders vorteilhaften Ausführung weist der Flexspline des Spannungswellengetriebes ganz allgemein ein Ankoppelelement zum drehfesten Ankoppeln eines externen Bauteils an den Flexspline auf. Das Ankoppelelement kann, wie bereits erwähnt, insbesondere eine Krempe oder einen Boden oder eine nach innen gerichtete Kreisscheibe aufweisen. Alternativ kann das Ankoppelelement auch einen axial über den Circularspline und/oder den Wellengenerator hervorstehenden Abschnitt, insbesondere einen axial über den Circularspline und/oder den Wellengenerator hervorstehenden Abschnitt einer Hülse des Flexsplines, aufweisen. Eine drehstarre Ankopplung kann hierbei beispielsweise in einfacher Weise durch einen radial angeordneten Stift, der durch eine radiale Bohrung des hervorstehenden Abschnitts geführt ist, gebildet sein.

Das Ankoppelelement kann alternativ durch einen innenverzahnten Ring (der nicht der erste Circularspline und nicht der zweite Circularspline ist) gebildet sein, der in die erste Flexsplineverzahnung oder die zweite Flexsplineverzahnung oder eine dritte Flexsplineverzahnung eingreift, wobei die Verzahnung des innenverzahnten Rings vorzugsweise dieselbe Zähnezahl aufweist, wie die Flexsplineverzahnung, mit der er in Zahneingriff steht.

Das erfindungsgemäße Spannungswellengetriebe ist ein Drei- (oder Mehr-)Wellengetriebe, wobei vorgesehen ist, dass eine der Wellen (insbesondere relativ zu einem Getriebegehäuse) festgehalten wird, während eine weitere Welle als Getriebeantrieb und eine andere Welle als Getriebeabtrieb fungieren. Beispielsweise kann der Flexspline dazu ausgebildet und angeordnet sein, als die festgehaltene Welle zu fungieren.

Bei einer besonderen Ausführung ist der erste Circularspline drehfest mit dem zweiten Circularspline verbunden oder sind der erste Circularspline und der zweite Circularspline gemeinsam einstückig hergestellt. Insbesondere können die beiden Circularsplines bei einer solchen Ausführung vorteilhaft als Getriebeantrieb dienen.

Hierbei kann vorteilhaft insbesondere vorgesehen sein, dass das Spannungswellengetriebe einen ersten Wellengenerator und einen zweiten Wellengenerator aufweist, die nicht unmittelbar und nicht drehfest miteinander verbunden sind. Insbesondere können der erste Wellengenerator und der zweite Wellengenerator drehbeweglich zueinander angeordnet und/oder gelagert sein. Jeder dieser Wellengeneratoren kann bei dieser Ausführung als ein eigener Getriebeabtrieb fungieren, insbesondere, wenn der erste Circularspline und der zweite Circularspline oder der Flexspline als Getriebeantrieb fungieren. Insbesondere kann hierbei vorteilhaft vorgesehen sein, dass die erste Flexsplineverzahnung Teil eines ersten Flexsplines ist und dass die zweite Flexsplineverzahnung Teil eines zweiten Flexsplines ist.

Es ist alternativ jedoch auch möglich, dass dem ersten Wellengenerator und dem zweiten Wellengenerator wenigstens eine Schaltkupplung triebtechnisch nachgeschaltet ist. Hierbei gilt natürlich, dass die Schaltkupplung dem ersten Wellengenerator und dem zweiten Wellengenerator triebtechnisch vorgeschaltet ist, wenn das Getriebe im Umkehrbetrieb betrieben wird. Die Schaltkupplung kann vorteilhaft derart ausgebildet sein, dass ein Getriebeabtrieb des Spannungswellengetriebes mittels der Schaltkupplung wahlweise mit dem ersten Wellengenerator und/oder dem zweiten Wellengenerator drehmomentübertragend verbindbar ist.

Wenn bei einer solchen Ausführung eine drehmomentübertragende Verbindung des ersten Wellengenerators mit dem Getriebeabtrieb hergestellt ist und wenn gleichzeitig eine drehmomentübertragende Verbindung des zweiten Wellengenerators mit dem Getriebeabtrieb geöffnet ist, weist das Spannungswellengetriebe ein Übersetzungsverhältnis auf, das durch die Zähneanzahl der ersten Flexsplineverzahnung und die Zähneanzahl des ersten Circularsplines festgelegt ist.

Wenn hingegen bei einer solchen Ausführung eine drehmomentübertragende Verbindung des ersten Wellengenerators mit dem Getriebeabtrieb geöffnet ist und wenn gleichzeitig eine drehmomentübertragende Verbindung des zweiten Wellengenerators mit dem Getriebeabtrieb geschlossen ist, weist das Spannungswellengetriebe ein Übersetzungsverhältnis auf, das durch die Zähneanzahl der zweiten Flexsplineverzahnung und die Zähneanzahl des zweiten Circularsplines festgelegt ist.

Wenn bei einer solchen Ausführung sowohl eine drehmomentübertragende Verbindung des ersten Wellengenerators mit dem Getriebeabtrieb als auch eine drehmomentübertragende Verbindung des zweiten Wellengenerators mit dem Getriebeabtrieb geschlossen ist, fungiert das Spannungswellengetriebe als Blockiervorrichtung.

Vorzugsweise ist der erste Wellengenerator von dem zweiten Wellengenerator (und von ggf. vorhandenen weiteren Wellengeneratoren) verschieden. Der erste Wellengenerator unterscheidet sich vorzugsweise in Form und/oder Größe von dem zweiten Wellengenerator. Beispielsweise ist es möglich, dass der erste Wellengenerator eine andere ovale Form aufweist, als der zweite Wellengenerator. Insbesondere kann sich der erste Wellengenerator hinsichtlich der Größe in Richtung der Hochachse von dem zweiten Wellengenerator unterscheiden.

Alternativ oder zusätzlich ist es auch möglich, dass sich der erste Wellengenerator hinsichtlich der Größe in Richtung der Niedrigachse von dem zweiten Wellengenerator unterscheidet.

Bei einer ganz besonders vorteilhaften Ausführung ist die Differenz der Größe des ersten Wellengenerators in Richtung seiner Hochachse und der Größe des ersten Wellengenerators in Richtung seiner Niedrigachse verschieden von der Differenz der Größe des zweiten Wellengenerators in Richtung seiner Hochachse und der Größe des zweiten Wellengenerators in Richtung seiner Niedrigachse.

Der erste Wellengenerator ist vorzugsweise hinsichtlich seiner Form und/oder seiner Größe dazu ausgelegt, einen möglichst optimalen Zahneingriff der ersten Flexsplineverzahnung in die erste Circularsplineverzahnung und ein optimales Abwälzen der ersten Flexsplineverzahnung innerhalb der ersten Circularsplineverzahnung im Betrieb des Spannungswellengetriebes zu gewährleisten. Der zweite Wellengenerator ist analog hinsichtlich seiner Form und/oder Größe dazu ausgelegt, einen möglichst optimalen Zahneingriff der zweiten Flexsplineverzahnung in die zweite Circularsplineverzahnung und ein optimales Abwälzen der zweiten Flexsplineverzahnung innerhalb der zweiten Circularsplineverzahnung im Betrieb des Spannungswellengetriebes zu gewährleisten.

Bei einer besonderen Ausführung sind die erste Flexsplineverzahnung Teil eines ersten Flexsplines und die zweite Flexsplineverzahnung Teil eines zweiten Flexsplines. Hierbei kann insbesondere vorgesehen sein, dass der erste Flexspline nicht unmittelbar und nicht drehfest mit dem zweiten Flexspline verbunden ist. Insbesondere können der erste Flexspline und der zweite Flexspline drehbeweglich zueinander angeordnet und/oder gelagert sein. Ganz besonders vorteilhaft und robust ist jedoch eine Ausführung, bei der der erste Flexspline drehfest mit dem zweiten Flexspline verbunden ist oder bei der es ausschließlich einen einzigen Flexspline gibt, der die beiden Flexsplineverzahnungen aufweist.

Vorzugsweise ist das Verhältnis der Zähneanzahl der ersten Flexsplineverzahnung zur Zähneanzahl der ersten Circularsplineverzahnung verschieden von dem Verhältnis der Zähneanzahl der zweiten Flexsplineverzahnung zur Zähneanzahl der zweiten Circularsplineverzahnung, wobei jedes der Verhältnisse ungleich 1 ist.

Nach einem eigenständigen, alternativen Erfindungsgedanken ist ein Spannungswellengetriebe vorgesehen, bei dem die Zähneanzahl der ersten Flexsplineverzahnung nicht verschieden ist von der Zähneanzahl der zweiten Flexsplineverzahnung und bei dem das Verhältnis der Zähneanzahl der ersten Flexsplineverzahnung zur Zähneanzahl der ersten Circularsplineverzahnung verschieden ist von dem Verhältnis der Zähneanzahl der zweiten Flexsplineverzahnung zur Zähneanzahl der zweiten Circularsplineverzahnung, wobei jedes der Verhältnisse ungleich 1 ist. Bei einer solchen Ausführung sind (trotz gleicher Zähneanzahl der Flexsplineverzahnungen) auch unterschiedliche Übersetzungsverhältnisse möglich, jedoch ist der Unterschied der Übersetzungsverhältnisse sehr limitiert, weil sich die Anzahl der Zähne der Flexsplineverzahnung in der Praxis nur um wenige Zähne von der Anzahl der Zähne der Circularsplineverzahnung unterscheiden kann.

Das erfindungsgemäße Spannungswellengetriebe kann auch im Umkehrbetrieb verwendet werden, bei dem ein Getriebeantrieb als Getriebeabtrieb und/oder ein Getriebeabtrieb als Getriebeantrieb verwendet wird.

Von ganz besonderem Vorteil ist ein Roboter, insbesondere ein Industrieroboter, der wenigstens ein erfindungsgemäßes Spannungswellengetriebe beinhaltet. Insbesondere kann das erfindungsgemäße Spannungswellengetriebe in einem Robotergelenk eingesetzt werden. Einem solchen Roboter ist es ermöglicht, unter Verwendung eines ersten Übersetzungsverhältnisses des Spannungswellengetriebes leichte Gegenstände sehr schnell zu bewegen und im Falle von schwereren Gegenständen, das Spannungswellengetriebe auf ein zweites Übersetzungsverhältnis umzuschalten, um auch die schweren Gegenstände bewegen zu können. Insbesondere ist es darüber hinaus auch möglich, durch ein entsprechendes Schalten der Schaltkupplung (bzw. der Schaltkupplungen) ein Blockieren des Spannungswellengetriebes, wie dies weiter oben beschrieben ist, und damit ein Blockieren des Roboterarmes (beispielsweise in einem Störungsfall) zu bewirken.

Von ganz besonderem Vorteil ist ein Fahrwerk, insbesondere ein aktives Fahrwerk für ein Kraftfahrzeug, das wenigstens ein erfindungsgemäßes Spannungswellengetriebe aufweist. Beispielsweise ist es vorteilhaft möglich, das Übersetzungsverhältnis des Spannungswellengetriebes in Abhängigkeit vom Beladungszustand des Fahrzeuges zu wählen. Insbesondere ist es darüber hinaus auch möglich, durch ein entsprechendes Schalten der Schaltkupplung (bzw. der Schaltkupplungen), ein Blockieren des Spannungswellengetriebes, wie dies weiter oben beschrieben ist, und damit ein Blockieren der Aktivfunktion des Fahrwerk (beispielsweise in einem Störungsfall) zu bewirken, wie dies weiter oben beschrieben ist.

Von ganz besonderem Vorteil ist eine Lenkung, insbesondere PKW-Lenkung oder LKW-Lenkung, die wenigstens ein erfindungsgemäßes Spannungswellengetriebe aufweist. Die Lenkung kann insbesondere eine Servolenkung und/oder eine Überlagerungslenkung sein.

Ganz allgemein und nach einem weiteren eigenständigen Erfindungsgedanken ist ein Spannungswellengetriebe von besonderem Vorteil, das als ein Schaltgetriebe mit vier Wellen ausgebildet ist, wobei mittels einer Schaltkupplung zwischen zwei Gruppen von Wellen, von denen jede drei der vier Wellen umfasst, als jeweils aktive Gruppe umgeschaltet werden kann. Beispielsweise kann das Spannungswellengetriebe eine erste Flexsplineverzahnung, welche mit einer ersten Circularsplineverzahnung in Eingriff steht und eine zweite Flexsplineverzahnung, welche mit einer zweiten Circularsplineverzahnung in Eingriff steht, aufweisen, wobei zu einer ersten Gruppe ein Wellengenerator (insbesondere als Antrieb), der Flexspline (insbesondere als Drehmomentabstützung) und ein erster Circularspline (insbesondere als Abtrieb), der die erste Circularsplineverzahnung aufweist, gehören, und wobei zu einer zweiten Gruppe der Wellengenerator (insbesondere als Antrieb), der Flexspline (insbesondere als Drehmomentabstützung) und ein zweiter Circularspline (insbesondere als Abtrieb), der die erste Circularsplineverzahnung aufweist, gehören. Bei diesem Spannungswellengetriebe kann darüber hinaus eines oder mehrere der in dieser Anmeldung beschriebenen Merkmale verwirklicht sein.

Ganz allgemein und nach einem weiteren eigenständigen Erfindungsgedanken ist ein Spannungswellengetriebe mit folgenden Aspekten von besonderem Vorteil:
1. Spannungswellengetriebe, bei dem eine erste Flexsplineverzahnung mit einer ersten Circularsplineverzahnung in Eingriff steht und eine zweite Flexsplineverzahnung mit einer zweiten Circularsplineverzahnung in Eingriff steht, wobei die Zähneanzahl der ersten Flexsplineverzahnung verschieden ist von der Zähneanzahl der zweiten Flexsplineverzahnung.
2. Spannungswellengetriebe nach Aspekt 1, dadurch gekennzeichnet, dass die erste Circularsplineverzahnung Teil eines ersten Circularsplines ist und dass die zweite Circularsplineverzahnung Teil eines zweiten Circularsplines ist.
3. Spannungswellengetriebe nach Aspekt 2, dadurch gekennzeichnet, dass der erste Circularspline nicht unmittelbar und nicht drehfest mit dem zweiten Circularspline verbunden ist.
4. Spannungswellengetriebe nach Aspekt 3, dadurch gekennzeichnet, dass die Schaltkupplung dem ersten Circularspline und dem zweiten Circularspline triebtechnisch nachgeschaltet ist.
5. Spannungswellengetriebe nach Aspekt 4, dadurch gekennzeichnet, dass ein Getriebeabtrieb des Spannungswellengetriebes mittels der Schaltkupplung wahlweise mit dem ersten Circularspline und/oder dem zweiten Circularspline drehmomentübertragend verbindbar ist.
6. Spannungswellengetriebe nach Aspekt 3, dadurch gekennzeichnet, dass der erste Circularspline als ein erster Getriebeabtrieb fungiert und dass der zweite Circularspline als ein zweiter Getriebeabtrieb fungiert.
7. Spannungswellengetriebe nach einem der Aspekte 2 bis 6, dadurch gekennzeichnet, dass das Spannungswellengetriebe einen ersten Wellengenerator und einen zweiten Wellengenerator aufweist, die drehfest miteinander verbunden sind oder die gemeinsam einstückig hergestellt sind.
8. Spannungswellengetriebe nach einem der Aspekte 2 bis 7, dadurch gekennzeichnet, dass die erste Flexsplineverzahnung und die zweite Flexsplineverzahnung Bestandteile desselben Flexsplines sind.
9. Spannungswellengetriebe nach Aspekt 8, dadurch gekennzeichnet, dass der Flexspline eine radialflexible Hülse aufweist, die die erste Flexsplineverzahnung und die zweite Flexsplineverzahnung aufweist.
10. Spannungswellengetriebe nach einem der Aspekte 1 bis 9, dadurch gekennzeichnet, dass ein Ankoppelelement zum drehfesten Ankoppeln eines externen Bauteils an den Flexspline vorhanden ist.
11. Spannungswellengetriebe nach Aspekt 9, dadurch gekennzeichnet, dass die Hülse an einem Ende drehfest mit einer radial nach außen gerichteten Krempe verbunden ist.
12. Spannungswellengetriebe nach Aspekt 10 und 11, dadurch gekennzeichnet, dass die Krempe Teil des Ankoppelelements ist.
13. Spannungswellengetriebe nach einem der Aspekte 9 bis 12, dadurch gekennzeichnet, dass die Hülse an einem Ende drehfest mit einem radial nach innen gerichteten Boden oder einer radial nach innen gerichteten Kreisscheibe verbunden ist.
14. Spannungswellengetriebe nach Aspekt 10 und 13, dadurch gekennzeichnet, dass der Boden bzw. die Kreisscheibe Teil des Ankoppelelements ist.
15. Spannungswellengetriebe nach Aspekt 2, dadurch gekennzeichnet, dass der erste Circularspline drehfest mit dem zweiten Circularspline verbunden ist oder dass der erste Circularspline und der zweite Circularspline gemeinsam einstückig hergestellt sind.
16. Spannungswellengetriebe nach Aspekt 15, dadurch gekennzeichnet, dass das Spannungswellengetriebe einen ersten Wellengenerator und einen zweiten Wellengenerator aufweist, die nicht unmittelbar und nicht drehfest miteinander verbunden sind.
17. Spannungswellengetriebe nach Aspekt 16, dadurch gekennzeichnet, dass der erste Wellengenerator von dem zweiten Wellengenerator verschieden ist.
18. Spannungswellengetriebe nach Aspekt 16 oder 17, dadurch gekennzeichnet, dass dem ersten Wellengenerator und dem zweiten Wellengenerator wenigstens eine Schaltkupplung triebtechnisch nachgeschaltet ist.
19. Spannungswellengetriebe nach Aspekt 18, dadurch gekennzeichnet, dass ein Getriebeabtrieb des Spannungswellengetriebes mittels der Schaltkupplung wahlweise mit dem ersten Wellengenerator und/oder dem zweiten Wellengenerator drehmomentübertragend verbindbar ist.
20. Spannungswellengetriebe nach Aspekt 16 oder 17, dadurch gekennzeichnet, dass der erste Wellengenerator als ein erster Getriebeabtrieb fungiert und das der zweite Wellengenerator als ein zweiter Getriebeabtrieb fungiert.
21. Spannungswellengetriebe nach einem der Aspekte 15 bis 20, dadurch gekennzeichnet, dass die erste Flexsplineverzahnung Teil eines ersten Flexsplines ist und dass die zweite Flexsplineverzahnung Teil eines zweiten Flexsplines ist.
22. Spannungswellengetriebe nach Aspekt 21, dadurch gekennzeichnet, dass
   a. der erste Flexspline das Ankoppelelement aufweist oder dass der zweite Flexspline das Ankoppelelement aufweist, oder dass
   b. der erste Flexspline ein erstes Ankoppelelement aufweist und der zweite Flexspline ein zweites Ankoppelelement aufweist.
23. Spannungswellengetriebe nach Aspekt 21 oder 22, dadurch gekennzeichnet, dass der erste Flexspline nicht unmittelbar und nicht drehfest mit dem zweiten Flexspline verbunden ist.
24. Spannungswellengetriebe nach Aspekt 21 oder 22, dadurch gekennzeichnet, dass der erste Flexspline drehfest mit dem zweiten Flexspline verbunden ist.
25. Spannungswellengetriebe nach einem der Aspekte 1 bis 24, dadurch gekennzeichnet, dass das Verhältnis der Zähneanzahl der ersten Flexsplineverzahnung zur Zähneanzahl der ersten Circularsplineverzahnung verschieden ist von dem Verhältnis der Zähneanzahl der zweiten Flexsplineverzahnung zur Zähneanzahl der zweiten Circularsplineverzahnung, wobei jedes der Verhältnisse ungleich 1 ist.
26. Spannungswellengetriebe nach einem der Aspekte 1 bis 24, dadurch gekennzeichnet, dass die Zähneanzahl der ersten Flexsplineverzahnung nicht verschieden ist von der Zähneanzahl der zweiten Flexsplineverzahnung und dass das Verhältnis der Zähneanzahl der ersten Flexsplineverzahnung zur Zähneanzahl der ersten Circularsplineverzahnung verschieden ist von dem Verhältnis der Zähneanzahl der zweiten Flexsplineverzahnung zur Zähneanzahl der zweiten Circularsplineverzahnung, wobei jedes der Verhältnisse ungleich 1 ist.
27. Verwendung eines Spannungswellengetriebes nach einem der Aspekte 1 bis 26 im Umkehrbetrieb, bei dem der Getriebeabtrieb als Getriebeantrieb verwendet wird.
28. Roboter, insbesondere Industrieroboter, beinhaltend wenigstens ein Spannungswellengetriebe nach einem der Aspekte 1 bis 26.
29. Robotergelenk, das wenigstens ein Spannungswellengetriebe nach einem der Aspekte 1 bis 26 aufweist.
30. Fahrwerk, insbesondere aktives Fahrwerk für ein Kraftfahrzeug, das wenigstens ein Spannungswellengetriebe nach einem der Aspekte 1 bis 26 aufweist.
31. Lenkung, insbesondere PKW-Lenkung oder LKW-Lenkung, die wenigstens ein Spannungswellengetriebe nach einem der Aspekte 1 bis 26 aufweist.
32. Lenkung nach Aspekt 31, dadurch gekennzeichnet, dass die Lenkung eine Servolenkung und/oder eine Überlagerungslenkung ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Da es sich um ganz schematische Darstellung zur Erläuterung der Erfindung handelt und die meisten wesentlichen Teile des Spannungswellengetriebes ohnehin rotationssymmetrisch sind, ist der besseren Übersichtlichkeit halber jeweils nur eine Hälfte des Querschnitts des Spannungswellengetriebes dargestellt. Es zeigen:
- Fig. 1: ein erstes Ausführungsbeispiel eines erfindungsgemäßen Spannungswellengetriebes,
- Fig. 2: ein zweites Ausführungsbeispiel eines erfindungsgemäßen Spannungswellengetriebes,
- Fig. 3: ein drittes Ausführungsbeispiel eines erfindungsgemäßen Spannungswellengetriebes,
- Fig. 4: ein viertes Ausführungsbeispiel eines Spannungswellengetriebes nach einem eigenständigen Erfindungsgedanken,
- Fig. 5: ein fünftes Ausführungsbeispiel eines erfindungsgemäßen Spannungswellengetriebes,

- Fig. 6: das fünfte Ausführungsbeispiel eines erfindungsgemäßen Spannungswellengetriebes in einer anderen Schaltstellung der Schaltkupplung,
- Fig. 7: das fünfte Ausführungsbeispiel eines erfindungsgemäßen Spannungswellengetriebes in einer weiteren Schaltstellung der Schaltkupplung,
- Fig. 8: einen Querschnitt durch den ersten Wellengenerator und einen Querschnitt durch den zweiten Wellengenerator bei einem sechsten Ausführungsbeispiel eines erfindungsgemäßen Spannungswellengetriebes,
- Fig. 9: ein sechstes Ausführungsbeispiel eines erfindungsgemäßen Spannungswellengetriebes, und
- Fig. 10: ein siebentes Ausführungsbeispiel eines Spannungswellengetriebes nach einem eigenständigen Erfindungsgedanken.

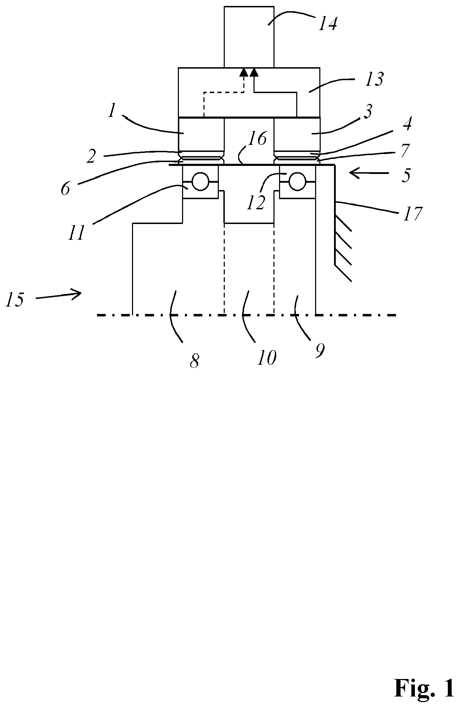

Figur 1 zeigt in einer schematischen Querschnittsdarstellung ein erstes Ausführungsbeispiel eines erfindungsgemäßen Spannungswellengetriebes.

Das Spannungswellengetriebe hat einen ersten Circularspline 1, der eine erste Circularsplineverzahnung 2 aufweist, und einen zweiten Circularspline 3, der eine zweite Circularsplineverzahnung 4 aufweist. Die erste Circularsplineverzahnung 2 und die zweite Circularsplineverzahnung 4 sind Innenverzahnungen.

Das Spannungswellengetriebe hat außerdem einen Flexspline 5, der eine erste Flexsplineverzahnung 6 und eine zweite Flexsplineverzahnung 7 aufweist. Die erste Flexsplineverzahnung 6 und die zweite Flexsplineverzahnung 7 sind Außenverzahnungen. Der Flexspline 5 weist eine radialflexible Hülse 16 auf, die die erste Flexsplineverzahnung 6 und die zweite Flexsplineverzahnung 7 trägt und die an einem Ende drehfest mit einer radial nach innen gerichteten Kreisscheibe 17 verbunden ist. Die Kreisscheibe 17 ist mit einem (nicht dargestellten) Getriebegehäuse verbunden, so dass der Flexspline 5 gehäusefest angeordnet ist.

Das Spannungswellengetriebe weist außerdem einen ersten Wellengenerator 8 und einen zweiten Wellengenerator 9 auf, die gemeinsam einstückig hergestellt und über einen Zwischenabschnitt 10 drehfest miteinander verbunden sind. Die verbundenen Wellengeneratoren 8, 9 bilden den Getriebeantrieb 15.

Der erste Wellengenerator 8 ist mittels eines ersten radialflexiblen Wälzlagers 11 relativ zu dem Flexspline 5 rotierbar gelagert, während der zweite Wellengenerator 9 mittels eines zweiten radialflexiblen Wälzlagers 12 relativ zu dem Flexspline 5 rotierbar gelagert ist.

Der erste Wellengenerator 8 hat in einer Ebene senkrecht zur Rotationsmittelachse des Spannungswellengetriebes eine ovale Außenkontur und biegt das erste Wälzlager 11 und den an das erste Wälzlager 11 angrenzenden Teil des Flexsplines 5 zu einer ovalen Form, wodurch die erste Flexsplineverzahnung 6 in der Hochachse des ovalen ersten Wellengenerators 8 an zwei gegenüberliegenden Stellen mit der ersten Circularsplineverzahnung 2 in Eingriff gelangt.

Auch der zweite Wellengenerator 9 hat in einer Ebene senkrecht zur Rotationsmittelachse des Spannungswellengetriebes eine ovale Außenkontur und biegt das zweite Wälzlager 12 und den an das zweite Wälzlager 12 angrenzenden Teil des Flexsplines 5 zu einer ovalen Form, wodurch die zweite Flexsplineverzahnung 7 in der Hochachse des ovalen zweiten Wellengenerators 9 an zwei gegenüberliegenden Stellen mit der zweiten Circularsplineverzahnung 4 in Eingriff gelangt.

Der erste Wellengenerator 8 unterscheidet sich in Form und Größe von dem zweiten Wellengenerator 9.

Der erste Wellengenerator 8 ist hinsichtlich seiner Form und/oder Größe dazu ausgelegt, einen möglichst optimalen Zahneingriff der ersten Flexsplineverzahnung 6 in die erste Circularsplineverzahnung 2 und ein optimales Abwälzen der ersten Flexsplineverzahnung 6 innerhalb der ersten Circularsplineverzahnung 2 im Betrieb des Spannungswellengetriebes zu gewährleisten.

Der zweite Wellengenerator 9 ist hinsichtlich seiner Form und/oder Größe dazu ausgelegt, einen möglichst optimalen Zahneingriff der zweiten Flexsplineverzahnung 7 in die zweite Circularsplineverzahnung 4 und ein optimales Abwälzen der zweiten Flexsplineverzahnung 7 innerhalb der zweiten Circularsplineverzahnung 4 im Betrieb des Spannungswellengetriebes zu gewährleisten.

Die Zähneanzahl der ersten Flexsplineverzahnung 6 ist verschieden von der Zähneanzahl der zweiten Flexsplineverzahnung 7.

Die erste Flexsplineverzahnung 6 weist 100 Zähne auf, während die erste Circularsplineverzahnung 2 102 Zähne aufweist. Auf diese Weise ist zwischen dem ersten Wellengenerator 8 und dem ersten Circularspline 1 ein Übersetzungsverhältnis von i = 50 realisiert.

Die zweite Flexsplineverzahnung 7 weist hingegen lediglich 60 Zähne auf, während die zweite Circularsplineverzahnung 4 62 Zähne aufweist. Auf diese Weise ist zwischen dem zweiten Wellengenerator 9 und dem zweiten Circularspline 3 ein Übersetzungsverhältnis von i = 30 realisiert.

Abweichend von diesem Beispiel sind, insbesondere bei ansonsten gleichem Aufbau, auch ganz andere Übersetzungen möglich.

Dem ersten Circularspline 1 und dem zweiten Circularspline 3 ist eine Schaltkupplung 13 triebtechnisch nachgeschaltet. Mittels der Schaltkupplung 13 kann ein Getriebeabtrieb 14 des Spannungswellengetriebes wahlweise mit dem ersten Circularspline 1 und/oder dem zweiten Circularspline 3 drehmomentübertragend verbunden werden. Durch ein gleichzeitiges Verbinden des Getriebeabtriebs 14 des Spannungswellengetriebes sowohl mit dem ersten Circularspline 1 als auch mit dem zweiten Circularspline 3 wird eine Blockierstellung erreicht.

Beispielsweise ist es möglich, den ersten Circularspline 1 drehmomentübertragend mit dem Getriebeabtrieb 14 zu verbinden, während der zweite Circularspline 3 von dem Getriebeabtrieb 14 abgekoppelt ist und frei rotieren kann. In diesem Fall ist zwischen dem Getriebeantrieb 15 und dem Getriebeabtrieb 14 ein Übersetzungsverhältnis von i = 50 realisiert.

Beispielsweise ist es auch möglich, den zweiten Circularspline 3 drehmomentübertragend mit dem Getriebeabtrieb 14 zu verbinden, während der erste Circularspline 1 von dem Getriebeabtrieb 14 abgekoppelt ist und frei rotieren kann. In diesem Fall ist zwischen dem Getriebeantrieb 15 und dem Getriebeabtrieb 14 ein Übersetzungsverhältnis von i = 30 realisiert.

Es ist auch möglich, sowohl den ersten Circularspline 1 als auch den zweiten Circularspline 3 drehmomentübertragend mit dem Getriebeabtrieb 14 zu verbinden. In diesem Fall ist das Spannungswellengetriebe blockiert und fungiert als Blockiervorrichtung, die den Getriebeantrieb 15 sowie den Getriebeabtrieb 14 über den gehäusefesten Flexspline 5 gehäusefest arretiert.

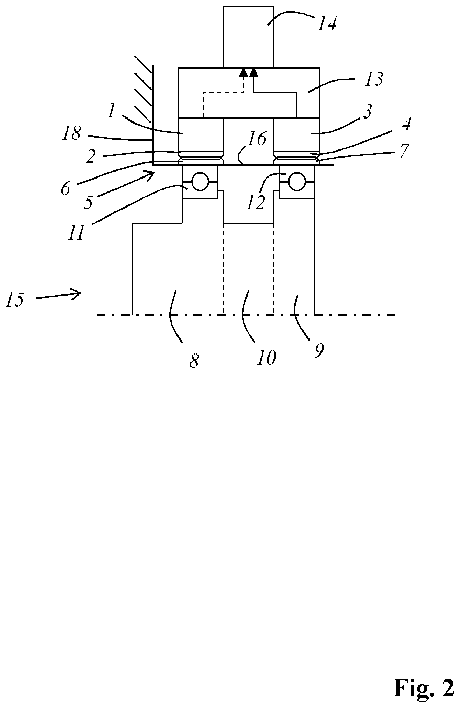

Figur 2 zeigt ein in einer schematischen Querschnittsdarstellung ein zweites Ausführungsbeispiel eines erfindungsgemäßen Spannungswellengetriebes. Das Spannungswellengetriebe unterscheidet sich von dem in Figur 1 dargestellten Spannungswellengetriebe durch eine andere Ausführung des Flexsplines 5.

Der Flexspline 5 weist bei dem zweiten Ausführungsbeispiel eine radialflexible Hülse 16 auf, die die erste Flexsplineverzahnung 6 und die zweite Flexsplineverzahnung 7 trägt und die an einem Ende drehfest mit einer radial nach außen gerichteten Krempe 18, insbesondere als Ankoppelelement zum drehfesten Ankoppeln eines externen Bauteils (insbesondere eines Getriebegehäuses) an den Flexspline 5, verbunden ist. Die Krempe 18 ist mit einem (nicht dargestellten) Getriebegehäuse verbunden, so dass der Flexspline 5 gehäusefest angeordnet ist.

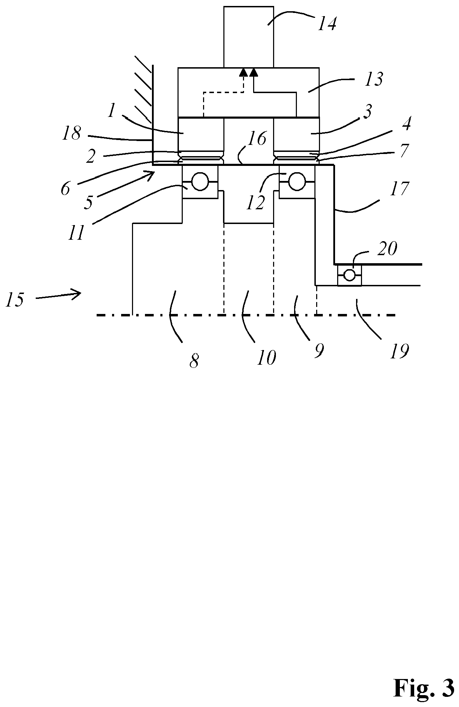

Figur 3 zeigt in einer schematischen Querschnittsdarstellung ein drittes Ausführungsbeispiel eines erfindungsgemäßen Spannungswellengetriebes. Das Spannungswellengetriebe unterscheidet sich von dem in Figur 1 und dem in Figur 2 dargestellten Spannungswellengetriebe durch eine andere Ausführung des Flexsplines 5.

Der Flexspline 5 weist bei dem dritten Ausführungsbeispiel eine radialflexible Hülse 16 auf, die die erste Flexsplineverzahnung 6 und die zweite Flexsplineverzahnung 7 trägt. Die radialflexible Hülse 16 ist an einem Ende drehfest mit einer radial nach innen gerichteten Kreisscheibe 17, insbesondere als ein erstes Ankoppelelement zum drehfesten Ankoppeln eines externen Bauteils an den Flexspline, verbunden und an ihrem anderen Ende drehfest mit einer radial nach außen gerichteten Krempe 18, insbesondere als ein zweites Ankoppelelement zum drehfesten Ankoppeln eines (ggf. weiteren) externen Bauteils an den Flexspline, verbunden ist. Die Krempe 18 ist mit einem (nicht dargestellten) Getriebegehäuse verbunden, so dass der Flexspline 5 gehäusefest angeordnet ist. Ein sich an die radial nach innen gerichtete Kreisscheibe 17 axial anschließender Abschnitt ist über ein weiteres Wälzlager 20 auf einer mit dem zweiten Wellengenerator 9 drehfest verbundenen Welle 19 rotierbar gelagert.

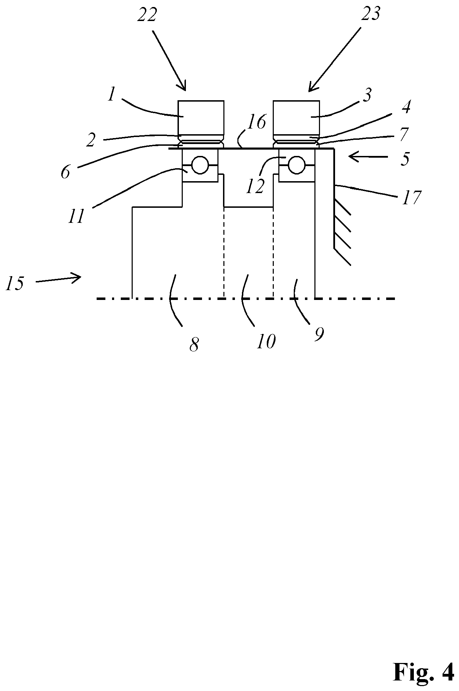

Figur 4 zeigt ein in einer schematischen Querschnittsdarstellung ein viertes Ausführungsbeispiel eines erfindungsgemäßen Spannungswellengetriebes nach einem eigenständigen Erfindungsgedanken. Bei diesem Ausführungsbeispiel ist keine Schaltkupplung 13 vorhanden. Vielmehr fungiert der erste Circularspline 1 als ein erster Getriebeabtrieb 22 und der zweite Circularspline 3 als ein zweiter Getriebeabtrieb 23.

Diese Ausführung ermöglicht es beispielsweise, mit demselben Spannungswellengetriebe zwei unterschiedliche Systeme oder zwei unterschiedliche Komponenten desselben Systems gleichzeitig, jedoch mit unterschiedlichen Übersetzungsverhältnissen, anzutreiben.

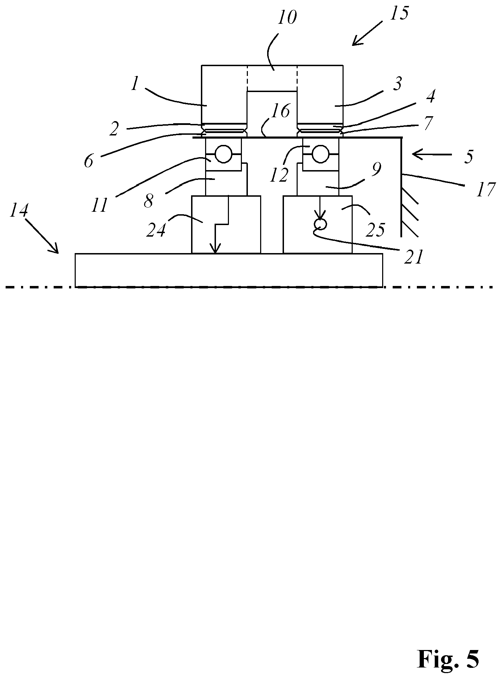

Figur 5 zeigt ein in einer schematischen Querschnittsdarstellung ein fünftes Ausführungsbeispiel eines erfindungsgemäßen Spannungswellengetriebes.

Das Spannungswellengetriebe hat einen ersten Circularspline 1, der eine erste Circularsplineverzahnung 2 aufweist, und einen zweiten Circularspline 3, der eine zweite Circularsplineverzahnung 4 aufweist. Die erste Circularsplineverzahnung 2 und die zweite Circularsplineverzahnung 4 sind Innenverzahnungen. Der erste Circularspline 1 und der zweite Circularspline 3 sind gemeinsam einstückig hergestellt und über einen Zwischenabschnitt 10 drehfest miteinander verbunden. Die Circularsplines 1, 3 bilden den Getriebeantrieb 15.

Das Spannungswellengetriebe hat außerdem einen Flexspline 5, der eine erste Flexsplineverzahnung 6 und eine zweite Flexsplineverzahnung 7 aufweist. Die erste Flexsplineverzahnung 6 und die zweite Flexsplineverzahnung 7 sind Außenverzahnungen. Der Flexspline 5 weist eine radialflexible Hülse 16 auf, die die erste Flexsplineverzahnung 6 und die zweite Flexsplineverzahnung 7 trägt und die an einem Ende drehfest mit einer radial nach innen gerichteten Kreisscheibe 17 verbunden ist. Die Kreisscheibe 17 ist mit einem (nicht dargestellten) Getriebegehäuse verbunden, so dass der Flexspline 5 gehäusefest angeordnet ist.

Das Spannungswellengetriebe weist außerdem einen ersten Wellengenerator 8 und einen zweiten Wellengenerator 9 auf, die voneinander separate Bauteile sind und die insbesondere nicht drehfest miteinander verbunden sind.

Der erste Wellengenerator 8 ist mittels eines ersten radialflexiblen Wälzlagers 11 relativ zu dem Flexspline rotierbar gelagert, während der zweite Wellengenerator 9 mittels eines zweiten radialflexiblen Wälzlagers 12 relativ zu dem Flexspline rotierbar gelagert ist.

Der erste Wellengenerator 8 hat in einer Ebene senkrecht zur Rotationsmittelachse des Spannungswellengetriebes eine ovale Außenkontur und biegt das erste Wälzlager 11 und den an das erste Wälzlager 11 angrenzenden Teil des Flexsplines 5 zu einer ovalen Form, wodurch die erste Flexsplineverzahnung 6 in der Hochachse des ovalen ersten Wellengenerators 8 an zwei gegenüberliegenden Stellen mit der ersten Circularsplineverzahnung 2 in Eingriff gelangt.

Auch der zweite Wellengenerator 9 hat in einer Ebene senkrecht zur Rotationsmittelachse des Spannungswellengetriebes eine ovale Außenkontur und biegt das zweite Wälzlager 12 und den an das zweite Wälzlager 12 angrenzenden Teil des Flexsplines 5 zu einer ovalen Form, wodurch die zweite Flexsplineverzahnung 7 in der Hochachse des ovalen zweiten Wellengenerators 9 an zwei gegenüberliegenden Stellen mit der zweiten Circularsplineverzahnung 4 in Eingriff gelangt.

Der erste Wellengenerator 8 unterscheidet sich in Form und Größe von dem zweiten Wellengenerator 9.

Der erste Wellengenerator 8 ist hinsichtlich seiner Form und/oder Größe dazu ausgelegt, einen möglichst optimalen Zahneingriff der ersten Flexsplineverzahnung 6 in die erste Circularsplineverzahnung 2 und ein optimales Abwälzen der ersten Flexsplineverzahnung 6 innerhalb der ersten Circularsplineverzahnung 2 im Betrieb des Spannungswellengetriebes zu gewährleisten.

Der zweite Wellengenerator 9 ist hinsichtlich seiner Form und/oder Größe dazu ausgelegt, einen möglichst optimalen Zahneingriff der zweiten Flexsplineverzahnung 7 in die zweite Circularsplineverzahnung 4 und ein optimales Abwälzen der zweiten Flexsplineverzahnung 7 innerhalb der zweiten Circularsplineverzahnung 4 im Betrieb des Spannungswellengetriebes zu gewährleisten.

Die Zähneanzahl der ersten Flexsplineverzahnung 6 ist verschieden von der Zähneanzahl der zweiten Flexsplineverzahnung 7.

Die erste Flexsplineverzahnung 6 weist 120 Zähne auf, während die erste Circularsplineverzahnung 2 122 Zähne aufweist. Auf diese Weise ist zwischen ersten Circularspline 1 und dem ersten Wellengenerator 8 ein Übersetzungsverhältnis von i = 1/60 realisiert.

Die zweite Flexsplineverzahnung 7 weist hingegen lediglich 80 Zähne auf, während die zweite Circularsplineverzahnung 4 82 Zähne aufweist. Auf diese Weise ist zwischen zweiten Circularspline 3 und dem zweiten Wellengenerator 9 ein Übersetzungsverhältnis von i = 1/40 realisiert.

Abweichend von diesem Beispiel sind, insbesondere bei ansonsten gleichem Aufbau, auch ganz andere Übersetzungen möglich.

Dem ersten Wellengenerator 8 ist eine erste Schaltkupplung 24 triebtechnisch nachgeschaltet. Mittels der ersten Schaltkupplung 24 kann ein Getriebeabtrieb 14 des Spannungswellengetriebes mit dem ersten Wellengenerator 8 drehmomentübertragend verbunden werden.

Dem zweiten Wellengenerator 9 ist eine zweite Schaltkupplung 25 triebtechnisch nachgeschaltet. Mittels der zweiten Schaltkupplung 25 kann der Getriebeabtrieb 14 des Spannungswellengetriebes mit dem zweiten Wellengenerator 9 drehmomentübertragend verbunden werden.

Beispielsweise ist es möglich, den ersten Wellengenerator 8 mittels der ersten Schaltkupplung 24 drehmomentübertragend mit dem Getriebeabtrieb 14 zu verbinden, während der zweite Wellengenerator 9 mittels der zweiten Schaltkupplung 25 auf einen Freilauf geschaltet wird und frei rotieren kann. In diesem Fall ist zwischen dem Getriebeantrieb 15 und dem Getriebeabtrieb 14 ein Übersetzungsverhältnis von i = 1/60 realisiert.

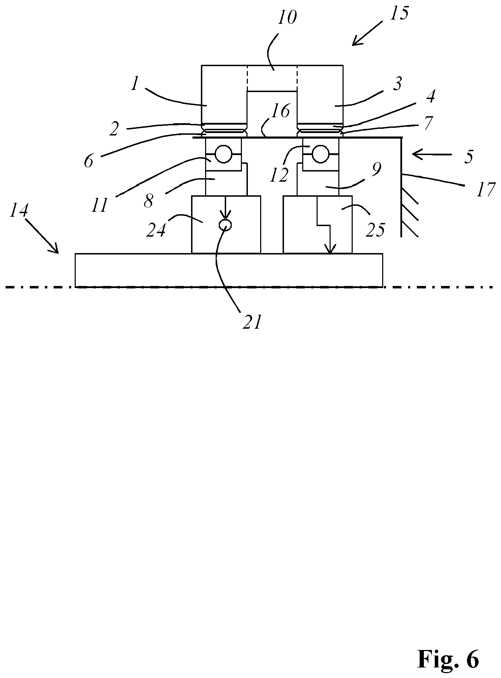

Es ist beispielsweise auch möglich, den zweiten Wellengenerator 9 mittels der zweiten Schaltkupplung 25 drehmomentübertragend mit dem Getriebeabtrieb 14 zu verbinden, während der erste Wellengenerator 8 mittels der ersten Schaltkupplung 24 in einen Freilaufmodus 26 geschaltet wird und frei rotieren kann, was in Figur 6 dargestellt ist. In diesem Fall ist zwischen dem Getriebeantrieb 15 und dem Getriebeabtrieb 14 ein Übersetzungsverhältnis von i = 1/40 realisiert.

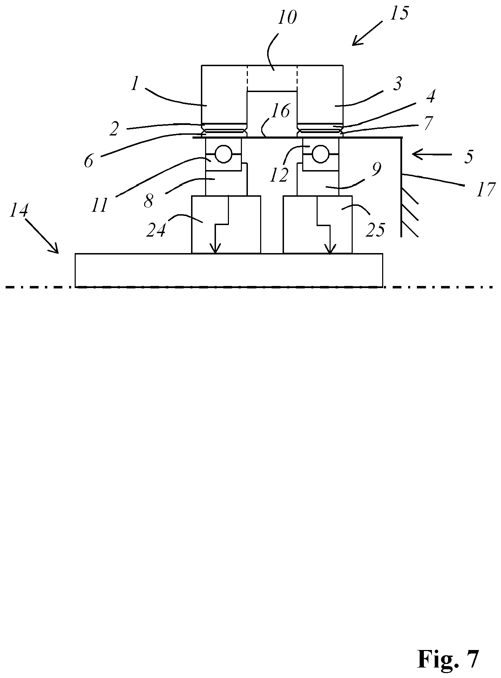

Es ist außerdem auch möglich, sowohl den ersten Wellengenerator 8 als auch den zweiten Wellengenerator 9 drehmomentübertragend mit dem Getriebeabtrieb 14 zu verbinden, was in Figur 7 dargestellt ist. In diesem Fall ist das Spannungswellengetriebe blockiert und fungiert als Blockiervorrichtung, die den Getriebeantrieb 15 sowie den Getriebeabtrieb 14 über den gehäusefesten Flexspline 5 gehäusefest arretiert.

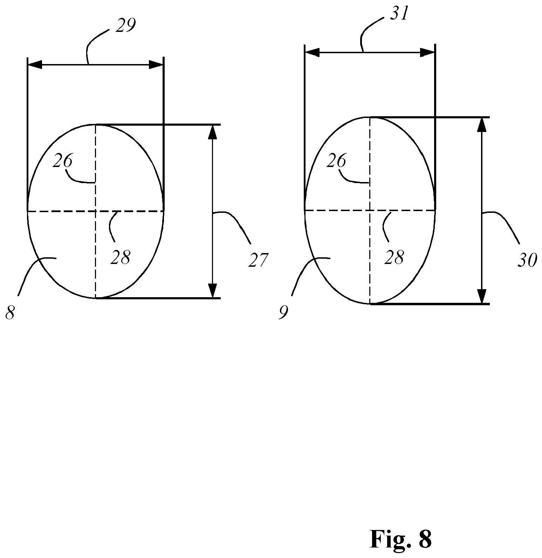

Figur 8 zeigt in einer Detailansicht einen Querschnitt durch den ersten Wellengenerator 8 und einen Querschnitt durch den zweiten Wellengenerator 9 bei einem sechsten Ausführungsbeispiel eines ansonsten nicht dargestellten erfindungsgemäßen Spannungswellengetriebes.

Der erste Wellengenerator 8 weist eine Hochachse 26 mit einer ersten Hochachsenlänge 27 auf. Der erste Wellengenerator 8 weist außerdem eine Niedrigachse 28 mit einer ersten Niedrigachsenlänge 29 auf. Der zweite Wellengenerator 9 weist eine Hochachse 26 mit einer zweiten Hochachsenlänge 30 auf. Der zweite Wellengenerator 9 weist außerdem eine Niedrigachse 28 mit einer zweiten Niedrigachsenlänge 31 auf.

Die erste Hochachsenlänge 27 ist von der zweiten Hochachsenlänge 30 verschieden. Außerdem ist die erste Niedrigachsenlänge 29 von der zweiten Niedrigachsenlänge 31 verschieden.

Der erste Wellengenerator 8 vorzugsweise ist hinsichtlich seiner Form und/oder Größe dazu ausgelegt, einen möglichst optimalen Zahneingriff der ersten Flexsplineverzahnung 6 in die erste Circularsplineverzahnung 2 und ein optimales Abwälzen der ersten Flexsplineverzahnung 6 innerhalb der ersten Circularsplineverzahnung 2 im Betrieb des Spannungswellengetriebes zu gewährleisten. Der zweite Wellengenerator 9 ist analog hinsichtlich seiner Form und/oder Größe dazu ausgelegt, einen möglichst optimalen Zahneingriff der zweiten Flexsplineverzahnung 7 in die zweite Circularsplineverzahnung 4 und ein optimales Abwälzen der zweiten Flexsplineverzahnung 7 innerhalb der zweiten Circularsplineverzahnung 4 im Betrieb des Spannungswellengetriebes zu gewährleisten.

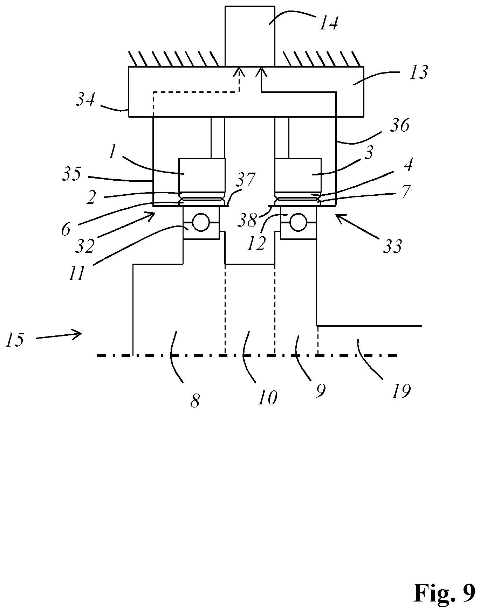

Figur 9 zeigt in einer schematischen Querschnittsdarstellung ein sechstes Ausführungsbeispiel eines erfindungsgemäßen Spannungswellengetriebes.

Das Spannungswellengetriebe hat einen ersten Circularspline 1, der eine erste Circularsplineverzahnung 2 aufweist, und einen zweiten Circularspline 3, der eine zweite Circularsplineverzahnung 4 aufweist. Die erste Circularsplineverzahnung 2 und die zweite Circularsplineverzahnung 4 sind Innenverzahnungen. Der erste Circularspline 1 und der zweite Circularspline stützen sich drehfest an einem drehfest angeordneten Schaltkupplungsgehäuse einer Schaltkopplung 13 ab. Das Schaltkupplungsgehäuse 34 kann beispielsweise an einem (nicht dargestellten) Gesamtgetriebegehäuse des Spannungswellengetriebes drehfest befestigt sein.

Das Spannungswellengetriebe hat außerdem einen ersten Flexspline 32, der eine erste Flexsplineverzahnung 6 aufweist. Außerdem hat das Spannungswellengetriebe einen zweiten Flexspline 33, der eine zweite Flexsplineverzahnung 7 aufweist. Die erste Flexsplineverzahnung 6 und die zweite Flexsplineverzahnung 7 sind Außenverzahnungen. Die Zähneanzahl der ersten Flexsplineverzahnung 6 ist verschieden von der Zähneanzahl der zweiten Flexsplineverzahnung 7.

Der erste Flexspline 32 weist eine erste radialflexible Hülse 37 auf, die die erste Flexsplineverzahnung 6 trägt und die an einem Ende drehfest mit einer radial nach außen gerichteten ersten Krempe 35 verbunden ist. Der zweite Flexspline 33 weist eine zweite radialflexible Hülse 38 auf, die die zweite Flexsplineverzahnung 7 trägt und die an einem Ende drehfest mit einer radial nach außen gerichteten zweiten Krempe 36 verbunden ist.

Dem ersten Flexspline 32 und dem zweiten Flexspline 33 ist eine Schaltkupplung 13 triebtechnisch nachgeschaltet. Mittels der Schaltkupplung 13 kann ein Getriebeabtrieb 14 des Spannungswellengetriebes wahlweise mit dem ersten Flexspline 32 und/oder dem zweiten Flexspline 33 drehmomentübertragend verbunden werden. Durch ein gleichzeitiges Verbinden des Getriebeabtriebs 14 des Spannungswellengetriebes sowohl mit dem ersten Flexspline 32 als auch mit dem zweiten Flexspline 33 wird eine Blockierstellung erreicht.

Beispielsweise ist es möglich, den ersten Flexspline 32 drehmomentübertragend mit dem Getriebeabtrieb 14 zu verbinden, während der zweite Flexspline 33 von dem Getriebeabtrieb 14 abgekoppelt ist und frei rotieren kann. In diesem Fall ist zwischen dem Getriebeantrieb 15 und dem Getriebeabtrieb 14 ein erstes Übersetzungsverhältnis realisiert.

Beispielsweise ist es auch möglich, den zweiten Flexspline 33 drehmomentübertragend mit dem Getriebeabtrieb 14 zu verbinden, während der erste Flexspline 32 von dem Getriebeabtrieb 14 abgekoppelt ist und frei rotieren kann. In diesem Fall ist zwischen dem Getriebeantrieb 15 und dem Getriebeabtrieb 14 ein zweites Übersetzungsverhältnis realisiert, das von dem ersten Übersetzungsverhältnis verschieden ist.

Das Spannungswellengetriebe weist außerdem einen ersten Wellengenerator 8 und einen zweiten Wellengenerator 9 auf, die gemeinsam einstückig hergestellt und über einen Zwischenabschnitt 10 drehfest miteinander verbunden sind. Der erste Wellengenerator 8 ist mittels eines ersten radialflexiblen Wälzlagers 11 relativ zu dem ersten Flexspline 32 rotierbar gelagert, während der zweite Wellengenerator 9 mittels eines zweiten radialflexiblen Wälzlagers 12 relativ zu dem zweiten Flexspline 33 rotierbar gelagert ist. Die verbundenen Wellengeneratoren 8, 9 bilden den Getriebeantrieb 15. Beispielsweise kann sich ein (nicht dargestellter) Antriebsmotor, der die Wellengeneratoren 8, 9 (beispielsweise über die Welle 19) zur Rotation antreibet, mit einem (nicht dargestellten) Gesamtgetriebegehäuse des Spannungswellengetriebes drehfest befestigt sein, um das Antriebsdrehmoment abzustützen.

Der erste Wellengenerator 8 hat in einer Ebene senkrecht zur Rotationsmittelachse des Spannungswellengetriebes eine ovale Außenkontur und biegt das erste Wälzlager 11 und den an das erste Wälzlager 11 angrenzenden Teil des ersten Flexsplines 32 zu einer ovalen Form, wodurch die erste Flexsplineverzahnung 6 in der Hochachse des ovalen ersten Wellengenerators 8 an zwei gegenüberliegenden Stellen mit der ersten Circularsplineverzahnung 2 in Eingriff gelangt.

Auch der zweite Wellengenerator 9 hat in einer Ebene senkrecht zur Rotationsmittelachse des Spannungswellengetriebes eine ovale Außenkontur und biegt das zweite Wälzlager 12 und den an das zweite Wälzlager 12 angrenzenden Teil des zweiten Flexsplines 33 zu einer ovalen Form, wodurch die zweite Flexsplineverzahnung 7 in der Hochachse des ovalen zweiten Wellengenerators 9 an zwei gegenüberliegenden Stellen mit der zweiten Circularsplineverzahnung 4 in Eingriff gelangt.

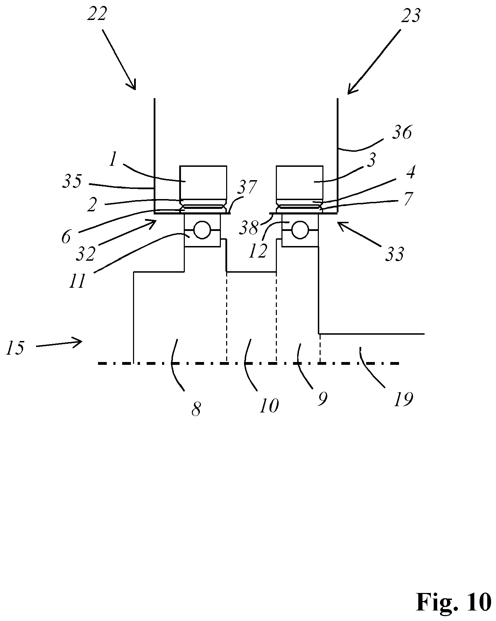

Es ist nach einem eigenständigen Erfindungsgedanken auch möglich, die Schaltkupplung wegzulassen, um eine andere Ausführung zu realisieren, bei der die mit dem ersten Flexspline 32 drehfest verbundene erste Krempe 35 als ein erster Getriebeabtrieb 22 und die mit dem zweiten Flexspline 33 drehfest verbundene zweite Krempe 36 als ein zweiter Getriebeabtrieb 23 fungiert, was in Figur 10 dargestellt ist.

### Bezugszeichenliste:

- 1: erster Circularspline
- 2: erste Circularsplineverzahnung
- 3: zweiter Circularspline
- 4: zweite Circularsplineverzahnung
- 5: Flexspline
- 6: erste Flexsplineverzahnung
- 7: zweite Flexsplineverzahnung
- 8: erster Wellengenerator
- 9: zweiter Wellengenerator
- 10: Zwischenabschnitt
- 11: erstes radialflexibles Wälzlager
- 12: zweites radialflexibles Wälzlager
- 13: Schaltkupplung
- 14: Getriebeabtrieb
- 15: Getriebeantrieb
- 16: radialflexible Hülse
- 17: Kreisscheibe
- 18: Krempe
- 19: Welle
- 20: weiteres Wälzlager
- 21: Freilauf
- 22: erster Getriebeabtrieb
- 23: zweiter Getriebeabtrieb
- 24: erste Schaltkupplung
- 25: zweite Schaltkupplung
- 26: Hochachse
- 27: erste Hochachsenlänge
- 28: Niedrigachse
- 29: erste Niedrigachsenlänge
- 30: zweite Hochachsenlänge
- 31: zweiten Niedrigachsenlänge
- 32: erster Flexspline
- 33: zweiter Flexspline
- 34: Schaltkupplungsgehäuse
- 35: Erste Krempe
- 36: Zweite Krempe
- 37: Erste radialflexible Hülse
- 38: Zweite radialflexible Hülse

## Patentansprüche

1. Spannungswellengetriebe, bei dem eine erste Flexsplineverzahnung mit einer ersten Circularsplineverzahnung in Eingriff steht und eine zweite Flexsplineverzahnung mit einer zweiten Circularsplineverzahnung in Eingriff steht, wobei die Zähneanzahl der ersten Flexsplineverzahnung verschieden ist von der Zähneanzahl der zweiten Flexsplineverzahnung, **gekennzeichnet durch** wenigstens eine Schaltkupplung zum Umschalten zwischen zwei unterschiedlichen Übersetzungsverhältnissen des Spannungswellengetriebes.

2. Spannungswellengetriebe nach Anspruch 1, **dadurch gekennzeichnet, dass** die erste Circularsplineverzahnung Teil eines ersten Circularsplines ist und dass die zweite Circularsplineverzahnung Teil eines zweiten Circularsplines ist, wobei der erste Circularspline nicht unmittelbar und nicht drehfest mit dem zweiten Circularspline verbunden ist.

3. Spannungswellengetriebe nach Anspruch 2, **dadurch gekennzeichnet, dass**
a. die Schaltkupplung dem ersten Circularspline und dem zweiten Circularspline triebtechnisch nachgeschaltet ist, oder dass
b. die Schaltkupplung dem ersten Circularspline und dem zweiten Circularspline triebtechnisch nachgeschaltet ist und ein Getriebeabtrieb des Spannungswellengetriebes mittels der Schaltkupplung wahlweise mit dem ersten Circularspline und/oder dem zweiten Circularspline drehmomentübertragend verbindbar ist.

4. Spannungswellengetriebe nach einem der Ansprüche 1 bis 3, **dadurch gekennzeichnet, dass** das Spannungswellengetriebe einen ersten Wellengenerator und einen zweiten Wellengenerator aufweist, die drehfest miteinander verbunden sind oder die gemeinsam einstückig hergestellt sind.

5. Spannungswellengetriebe nach einem der Ansprüche 1 bis 4, **dadurch gekennzeichnet, dass**
a. die erste Flexsplineverzahnung und die zweite Flexsplineverzahnung Bestandteile desselben Flexsplines sind, oder dass
b. die erste Flexsplineverzahnung und die zweite Flexsplineverzahnung Bestandteile desselben Flexsplines sind, wobei der Flexspline eine radialflexible Hülse aufweist, die die erste Flexsplineverzahnung und die zweite Flexsplineverzahnung aufweist, oder dass
c. die erste Flexsplineverzahnung und die zweite Flexsplineverzahnung Bestandteile desselben Flexsplines sind, wobei der Flexspline eine radialflexible Hülse aufweist, die die erste Flexsplineverzahnung und die zweite Flexsplineverzahnung aufweist und wobei die Hülse an einem Ende drehfest mit einer radial nach außen gerichteten Krempe verbunden ist, oder dass
d. die erste Flexsplineverzahnung und die zweite Flexsplineverzahnung Bestandteile desselben Flexsplines sind, wobei der Flexspline eine radialflexible Hülse aufweist, die die erste Flexsplineverzahnung und die zweite Flexsplineverzahnung aufweist und wobei die Hülse an einem Ende drehfest mit einem radial nach innen gerichteten Boden oder einer radial nach innen gerichteten Kreisscheibe verbunden ist.

6. Spannungswellengetriebe nach einem der Ansprüche 1 bis 5, **dadurch gekennzeichnet, dass** ein Ankoppelelement zum drehfesten Ankoppeln eines externen Bauteils an den Flexspline vorhanden ist.

7. Spannungswellengetriebe nach Anspruch 1, **dadurch gekennzeichnet, dass** die erste Circularsplineverzahnung Teil eines ersten Circularsplines ist und dass die zweite Circularsplineverzahnung Teil eines zweiten Circularsplines ist, wobei der erste Circularspline drehfest mit dem zweiten Circularspline verbunden ist oder dass der erste Circularspline und der zweite Circularspline gemeinsam einstückig hergestellt sind.

8. Spannungswellengetriebe nach Anspruch 7, **dadurch gekennzeichnet, dass**
a. das Spannungswellengetriebe einen ersten Wellengenerator und einen zweiten Wellengenerator aufweist, die nicht unmittelbar und nicht drehfest miteinander verbunden sind, oder dass
b. das Spannungswellengetriebe einen ersten Wellengenerator und einen zweiten Wellengenerator aufweist, die nicht unmittelbar und nicht drehfest miteinander verbunden sind, wobei der erste Wellengenerator von dem zweiten Wellengenerator verschieden ist, oder dass
c. das Spannungswellengetriebe einen ersten Wellengenerator und einen zweiten Wellengenerator aufweist, die nicht unmittelbar und nicht drehfest miteinander verbunden sind, wobei die Schaltkupplung dem ersten Wellengenerator und dem zweiten Wellengenerator triebtechnisch nachgeschaltet ist, oder dass
d. das Spannungswellengetriebe einen ersten Wellengenerator und einen zweiten Wellengenerator aufweist, die nicht unmittelbar und nicht drehfest miteinander verbunden sind, wobei die Schaltkupplung dem ersten Wellengenerator und dem zweiten Wellengenerator triebtechnisch nachgeschaltet ist und ein Getriebeabtrieb des Spannungswellengetriebes mittels der Schaltkupplung wahlweise mit dem ersten Wellengenerator und/oder dem zweiten Wellengenerator drehmomentübertragend verbindbar ist.

9. Spannungswellengetriebe nach einem der Ansprüche 1 bis 4, **dadurch gekennzeichnet, dass** die erste Flexsplineverzahnung Teil eines ersten Flexsplines ist und dass die zweite Flexsplineverzahnung Teil eines zweiten Flexsplines ist.

10. Spannungswellengetriebe nach Anspruch 20, **dadurch gekennzeichnet, dass**
a. der erste Flexspline ein Ankoppelelement zum drehfesten Ankoppeln eines externen Bauteils an den Flexspline aufweist oder dass der zweite Flexspline ein Ankoppelelement zum drehfesten Ankoppeln eines externen Bauteils an den Flexspline aufweist, oder dass
b. der erste Flexspline ein erstes Ankoppelelement zum drehfesten Ankoppeln eines externen Bauteils an den Flexspline aufweist und der zweite Flexspline ein zweites Ankoppelelement zum drehfesten Ankoppeln eines externen Bauteils an den Flexspline aufweist.

11. Spannungswellengetriebe nach einem der Ansprüche 1 bis 10, **dadurch gekennzeichnet, dass**
a. das Verhältnis der Zähneanzahl der ersten Flexsplineverzahnung zur Zähneanzahl der ersten Circularsplineverzahnung verschieden ist von dem Verhältnis der Zähneanzahl der zweiten Flexsplineverzahnung zur Zähneanzahl der zweiten Circularsplineverzahnung, wobei jedes der Verhältnisse ungleich 1 ist, oder dass
b. die Zähneanzahl der ersten Flexsplineverzahnung nicht verschieden ist von der Zähneanzahl der zweiten Flexsplineverzahnung und dass das Verhältnis der Zähneanzahl der ersten Flexsplineverzahnung zur Zähneanzahl der ersten Circularsplineverzahnung verschieden ist von dem Verhältnis der Zähneanzahl der zweiten Flexsplineverzahnung zur Zähneanzahl der zweiten Circularsplineverzahnung, wobei jedes der Verhältnisse ungleich 1 ist.

12. Verwendung eines Spannungswellengetriebes nach einem der Ansprüche 1 bis 11 im Umkehrbetrieb, bei dem der Getriebeabtrieb als Getriebeantrieb verwendet wird.

13. Roboter, insbesondere Industrieroboter, beinhaltend wenigstens ein Spannungswellengetriebe nach einem der Ansprüche 1 bis 11 oder Robotergelenk, das wenigstens ein Spannungswellengetriebe nach einem der Ansprüche 1 bis 11 aufweist.

14. Fahrwerk, insbesondere aktives Fahrwerk für ein Kraftfahrzeug, das wenigstens ein Spannungswellengetriebe nach einem der Ansprüche 1 bis 11 aufweist.

15. Lenkung, insbesondere Servolenkung und/oder Überlagerungslenkung, die wenigstens ein Spannungswellengetriebe nach einem der Ansprüche 1 bis 11 aufweist.
